# EUROPEAN PATENT APPLICATION

(11) **EP 4 701 208 A1**
(43) Date of publication of application: **25.02.2026**
(21) Application number: 25196669.3
(22) Date of filing: 19.08.2025
(51) Int. Cl.: H04N 21/485

(54) **DISPLAY DEVICE, PROCESSING SYSTEM AND METHOD FOR AUTOMATIC LOADING OPTIONS**

(30) Priority: 20.08.2024 TW 113131356
(71) Applicant: Giga-Byte Technology Co., Ltd., New Taipei City 231 (TW)
(72) Inventor: CHANG, Kuei-Shan, New Taipei City 231 (TW); CHOU, Shih-Chieh, New Taipei City 231 (TW); YANG, Bo, New Taipei City 231 (TW); LI, Lin, New Taipei City 231 (TW)
(74) Representative: Viering, Jentschura & Partner mbB Patent- und Rechtsanwälte

(57) **Abstract**

The display device (100), processing system (10) and method for automatic loading options into an OSD menu (320) are provided. The system includes a computer (200) and a display (100). The computer (200) executes an application (211) and outputs video signals. The display (100), connected to the computer (200), features an OSD (On-Screen Display) menu (320) with model information (122). This OSD menu (320) contains multiple groups of display options (321), whose combination of option contents forms the original display set (121). Upon receiving video signals, the display (100) generates a download request (131) based on model information (122) and the application (211), sending this request to the computer (200) to obtain at least one recommended option (221). The display (100) then updates the original display set (121) to the recommended option (221) and displays the application's interface (310) using this option.

## Description

### BACKGROUND

### Technical Field

The present invention relates to an electronic imaging device, system and method, and in particular to a display device, a processing system and method for automatic loading options into an OSD menu.

### Related Art

With the popularity of e-sports, display technology has developed to provide not only display images, but also richer display enhancement functions. In different application scenarios, users are required to switch between appropriate display settings when running various applications or games. Most displays are equipped with an On-Screen Display (OSD) menu to facilitate settings adjustment. However, each time users switch between different applications or games, they have to manually adjust the display options via the OSD menu. Moreover, when the applications or games end, the users are further required to adjust the display options back to original settings, which may be tedious and time-consuming.

### SUMMARY

In view of this, in one embodiment, a processing system for automatic loading options into an OSD menu includes a computer and a display. The computer executes an application and outputs video signals; the display, connected to the computer, features an OSD (On-Screen Display) menu with model information; the OSD menu contains multiple groups of display options, whose combination of option contents forms an original display set; upon receiving the video signals, the display receives a download request for obtaining at least one recommended option; and the display then updates the original display set to the recommended option and plays an application interface of the application using the recommended option, where the download request is matched with the model information and the application. The processing system for automatic loading options into an OSD menu can provide corresponding display options based on different applications and environments. The display can load the acquired display options into the OSD menu so as to reduce user operations.

In one embodiment, the processing system further includes a cloud server that contains multiple display option sets, and each display option set corresponds to the application and the model information, where the cloud server selects at least one from the display option sets, and the selected display option set is the recommended option, so as to generate the download request.

In one embodiment, the computer is connected to the cloud server, the cloud server provides the download request to the computer, and the computer forwards the download request to the display.

In one embodiment, the display is connected to the cloud server, and the cloud server provides the download request to the display.

In one embodiment, the cloud server receives an adjusted option set from the display, and the cloud server adds the adjusted option set into the display option sets.

In one embodiment, the computer ends the application, and the display modifies the recommended option into the original display set.

In one embodiment, the display device includes a display unit, a storage unit, a communication unit and a processing unit. The display unit is configured to play the application interface or the OSD menu; the storage unit is configured to store the original display set and the model information; the OSD menu includes multiple groups of display options, whose combination of option contents forms the original display set; and the communication unit is configured to receive the download request or at least one recommended option; the processing unit is connected to the display unit, the storage unit and the communication unit, the processing unit obtains the recommended option based on the received download request, and the processing unit then updates the original display set to the recommended option and plays the application interface of the application using the recommended option.

In one embodiment, the display device further includes an input unit, the processing unit is connected to the input unit, and the input unit is configured to adjust at least one display option of the original display set.

In one embodiment, the processing unit modifies the display options based on the adjustment requirement, the modified display options are the adjusted option set, and the storage unit stores the adjusted option set.

In one embodiment, an option supply terminal is the cloud server, the computer, the storage unit or a combination thereof, and the processing unit drives the communication unit to send the adjusted option set to the option supply terminal.

In one embodiment, a processing method for automatic loading options into an OSD menu includes: receiving a download request from an option supply terminal by a display, the download request being matched with an application and model information; obtaining at least one recommended option by the display based on the download request; and updating the original display set in the OSD menu to the recommended option and playing the application interface of the application using the recommended option by the display.

In one embodiment, the step of receiving a download request from an option supply terminal by the display includes: selecting a corresponding recommended option by the cloud server based on the application and the model information; encapsulating the selected recommended option into the download request and sending the download request to the computer by the cloud server; and forwarding the recommended option to the display by the computer.

In one embodiment, the step of updating an original display set to the recommended option and playing the application interface of the application using the recommended option by the display includes: storing the original display set by the display; and modifying the recommended option into the original display set by the display when the application ends.

In one embodiment, the step of receiving a download request from an option supply terminal by the display includes: adjusting a transmission destination of the download request by the display based on an option source.

According to the display device, the processing system and method for automatic loading options into an OSD menu, rapid switching between corresponding display options of different programs can be achieved, so that the user does not need to adjust the display options of the application each time. Moreover, after the application ends, the display can reload the original display options so as to decrease the adjustment time of the user on the display.

### BRIEF DESCRIPTION OF THE DRAWINGS

FIG. 1 is a schematic diagram showing an architecture of a processing system for automatic loading options into an OSD menu according to an embodiment.
FIG. 2 is a schematic diagram showing a display playing an OSD menu and an application interface according to an embodiment.
FIG. 3 is a schematic flowchart showing a processing method for automatic loading options into an OSD menu according to an embodiment.
FIG. 4 is a schematic diagram showing an architecture of a processing system for automatic loading options into an OSD menu according to another embodiment.
FIG. 5 is a processing sequence diagram showing automatically loading an OSD menu according to an embodiment.
FIG. 6 is a schematic diagram showing an architecture of a processing system for automatic loading options into an OSD menu according to another embodiment.
FIG. 7 is a schematic diagram showing an option source of an OSD menu according to an embodiment.

### DETAILED DESCRIPTION

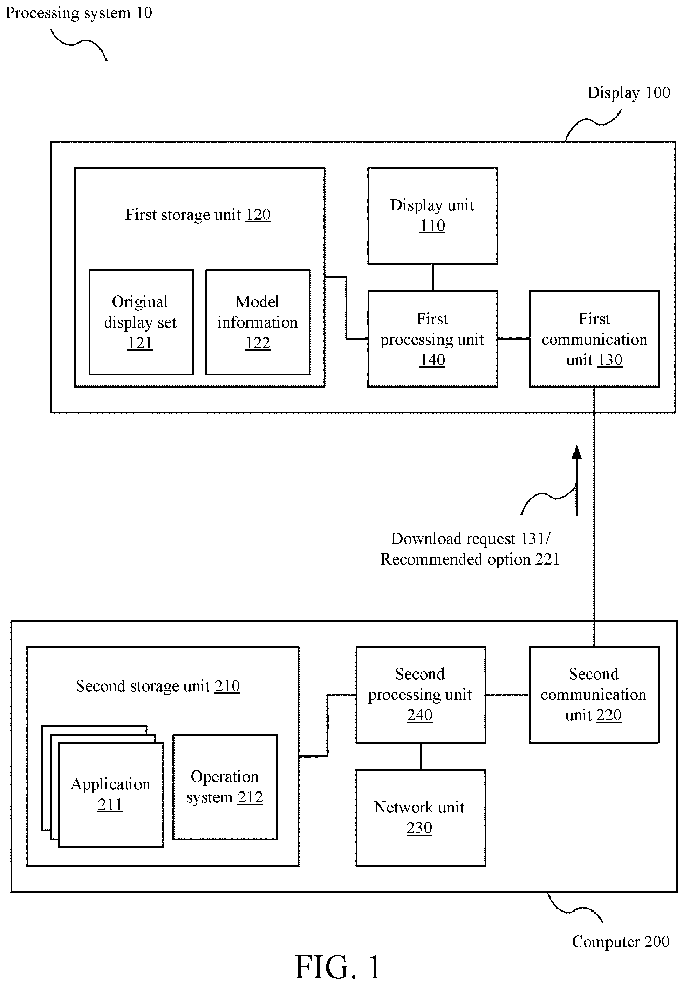

With reference to FIG. 1, FIG. 1 is a schematic diagram showing an architecture of a processing system for automatic loading options into an OSD menu according to an embodiment. The processing system for automatic loading options into an OSD menu (hereinafter referred to as a processing system 10) includes a display 100 and a computer 200. The computer 200 is connected to the display 100. The display 100 is provided with a display unit 110, a first storage unit 120, a first communication unit 130 and a first processing unit 140. The first processing unit 140 is connected to the display unit 110, and the first storage unit 120 and the first communication unit 130.

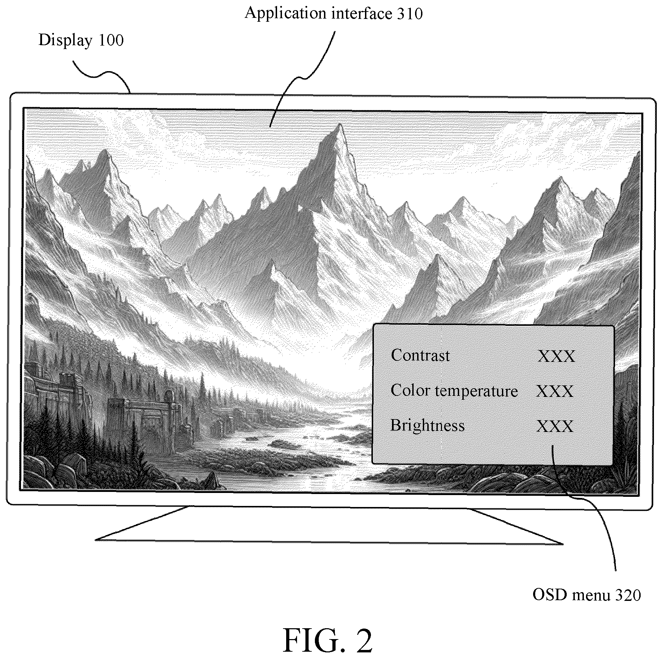

The display unit 110 is configured to play an application interface 310 of an application 211 or an OSD menu 320, as shown in FIG. 2. The OSD menu 320 is provided with multiple groups of display options 321, allowing a user to adjust option content values or providing related information to the user. The types of display options 321 may be, but are not limited to, brightness, contrast, saturation, color temperature, sharpness, Gamma, dynamic contrast, black levels, color management, noise reduction, image quality mode, resolution settings, input source selection, language selection, the application 211, screen refresh rate, system settings or option sources, and the like.

The first storage unit 120 stores an original display set 121 and model information 122. The original display set 121 is a content set of the display options 321 used by the display 100 when the application 211 is not executed. The first communication unit 130 is connected to the computer 200, and the first communication unit 130 receives a download request 131 or a recommended option 221. The type of the first communication unit 130 may be, but is not limited to, a High Definition Multimedia Interface (HDMI), a Universal Serial Bus Type-C (USB-C), a Digital Visual Interface (DVI), a DisplayPort interface (or referred to as DP Interface) and a Thunderbolt interface. In addition, the first communication unit 130 can also be connected to the computer 200 through wireless transmission, such as a Digital Living Network Alliance (DLNA) or Miracast. When the display unit 110 plays the application interface 310, the first processing unit 140 obtains the recommended option 221 from the application interface based on the received download request 131. The download request 131 contains at least one display option 321 corresponding to the model information 122 and the application 211.

The computer 200 is provided with a second storage unit 210, a second communication unit 220, a network unit 230 and a second processing unit 240. The second processing unit 240 is connected to the second storage unit 210, the second communication unit 220 and the network unit 230. The second communication unit 220 is connected to the first communication unit 130, and an interface of the second communication unit 220 is matched with an interface of the first communication unit 130. The second communication unit 220 transmits the download request 131 or the recommended option 221 to the first communication unit 130. The second storage unit 210 stores multiple groups of applications 211 and an operation system 212.

After the second processing unit 240 executes the operation system 212, the user can select any application 211 and the second processing unit 240 executes the selected application 211. When the operation system 212 is executed, the display 100 displays the corresponding operation picture. The executed application 211 generates video signals for the display 100. The display 100 generates the corresponding application interface 310 based on the video signals, as shown in FIG. 2. The application 211 can be a game, document editing software or image playing software and the like.

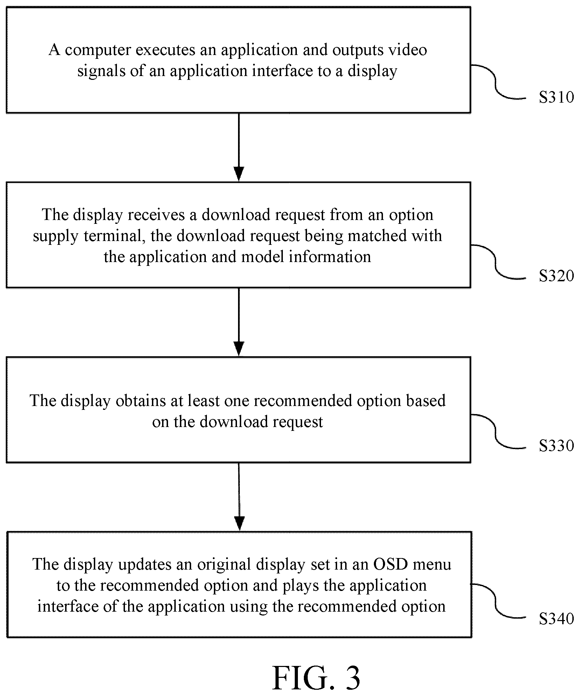

Different types of applications 211 may have different requirements on the application interface 310. For example, for the document editing software, it needs to adjust the contrast and the sharpness. For the game, it may need to adjust the display options 321 such as high dynamic range (HDR) for imaging, picture refresh rate, vertical synchronization or resolution in the application interface 310. Therefore, the display 100 generates corresponding download request 131 and related processing thereof, as shown in FIG. 3. The processing method for automatic loading options into the OSD 100 menu includes:
S310: executing the application and outputting the video signals of the application interface to the display by the computer;
S320: receiving the download request from the option supply terminal by the display, the download request being matched with the application and the model information;
S330: obtaining at least one recommended option by the display based on the download request; and
S340: updating the original display set in the OSD menu to the recommended option and playing the application interface of the application using the recommended option by the display.

Firstly, the computer 200 selects any application 211 and executes the selected application 211. When executing the application 211, the computer 200 generates corresponding video signals for the display 100 (corresponding to S310). After acquiring the video signals, the display 100 receives the download request 131 from the option supply terminal (corresponding to S320). In one embodiment, the option supply terminal can be a cloud server 400, the computer 200, the storage unit or a combination thereof.

The first processing unit 140 obtains at least one recommended option 221 based on the download request 131 (corresponding to S330). In the following different embodiments, the cloud server 400 and the computer 200 are treated as the option supply terminals for description, respectively. The computer 200 can search whether the second storage unit 210 stores related display option set or not based on the download request 131. If the second storage unit 210 stores the display option set, the computer 200 encapsulates the selected display option set into the recommended option 221 and sends the recommended option 221 to the display 100.

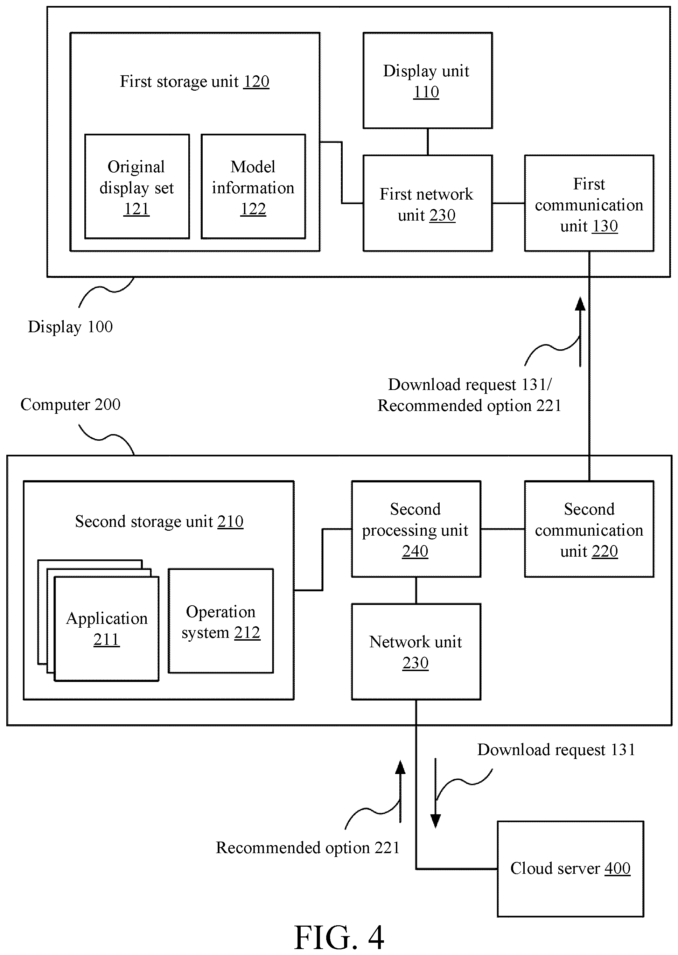

If the second storage unit 210 does not store the recommended option 221, the computer 200 can be connected to the cloud server 400 by the network unit 230. In one embodiment, the second processing unit 240 forwards the download request 131 to the cloud server 400 by the network unit 230, as shown in FIG. 4. The cloud server 400 contains multiple display option sets. Each display option set corresponds to respective application 211 and model information 122. Each display option set further includes at least one display option 321 and a content value thereof.

The cloud server 400 selects the at least one display option 321 from the display option sets, and the selected display option is referred to as the recommended option 221. Then, the cloud server 400 sends the recommended option 221 to the computer 200. The computer 200 forwards the recommended option 221 to the display 100. The display 100 modifies the related display option 321 in the OSD menu 320 based on the recommended option 221 (corresponding to S340), so as to make the content values of the display options 321 consistent with the recommended option 221. When the computer 200 executes the application 211, the display 100 can set the recommended option 221 as the content value of the corresponding display option 321 in the OSD menu 320. Meanwhile, the display 100 temporarily stores the original display set 121 in the first storage unit 120.

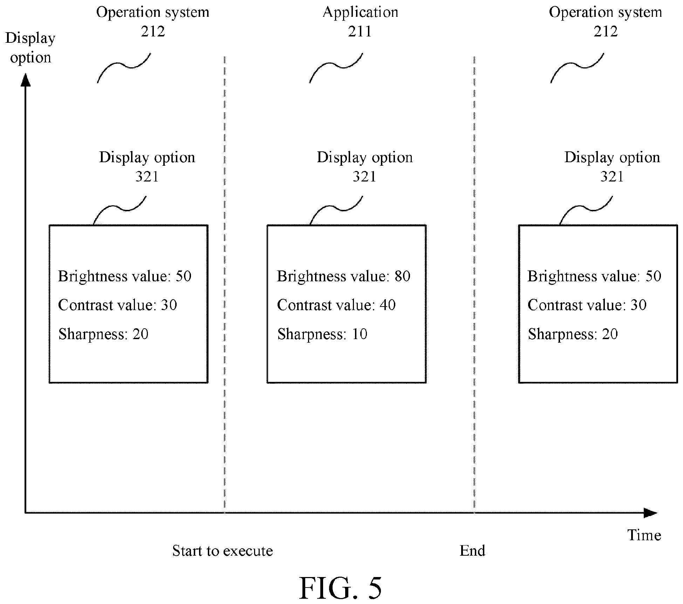

When the computer 200 ends the application 211, the display 100 loads the original display set 121 from the first storage unit 120 to the OSD menu 320, so as to revert the recommended option 221 to the content value of the original display option 321. In order to clearly describe the change of the display options 321 of the display 100 at different time points, please refer to FIG. 5. In FIG. 5, the bottom is a timeline, which represents the before, during, and after execution of application 211 from left to right. In FIG. 5, the longitudinal axis is the content values of the display options 321 of the display 100, but the display options 321 in FIG. 5 and the content values thereof are only examples for illustration, but not limited thereto. Before and after the execution of the application 211, the display 100 displays the picture of the operation system 212. Therefore, each content of the display options 321 is set as "brightness value: 50", "contrast value: 30", and "sharpness: 20". When the application 211 is executed, based on the contents of the recommended option 221, the display 100 adjusts the display options 321 into "brightness value: 80", "contrast value: 40", and "sharpness: 10".

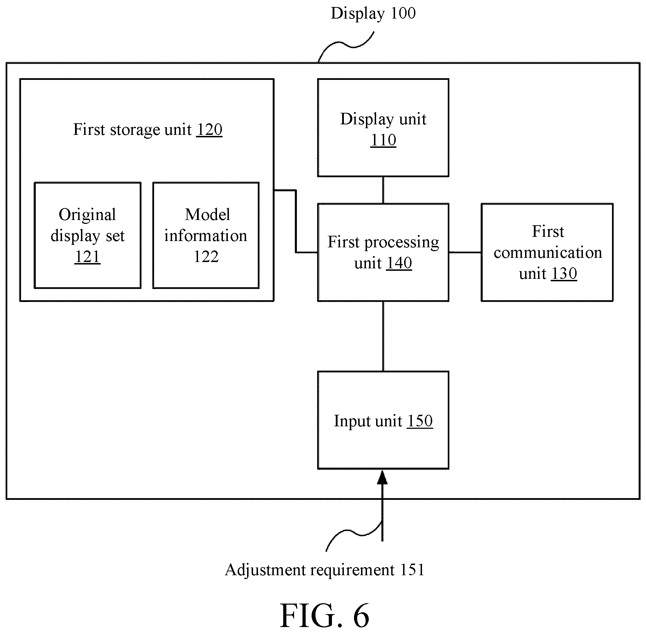

In one embodiment, the display 100 further includes an input unit 150, as shown in FIG. 6. The first processing unit 140 is connected to the input unit 150. The type of the input unit 150 may be, but is not limited to, a button or a control stick. The user can adjust the content value of each display option 321 of the OSD menu 320 by the input unit 150. Therefore, the user can generate an adjustment requirement 151 by the input unit 150. The first processing unit 140 adjusts the content value of the original display set 121 based on the adjustment requirement 151. Meanwhile, the modified display option 321 is referred to as the adjusted option set. After the first processing unit 140 ends the adjustment of the display option 321, the processing unit stores the adjusted option set into the storage unit.

In one embodiment, the display 100 sends the adjusted option set to the option supply terminal, and the option supply terminal stores the received adjusted option set. Taking the cloud server 400 as an example, after the cloud server 400 stores the adjusted option set, the cloud server 400 can provide the adjusted option set to other displays 100 to serve as the recommended option 221 of the other displays 100.

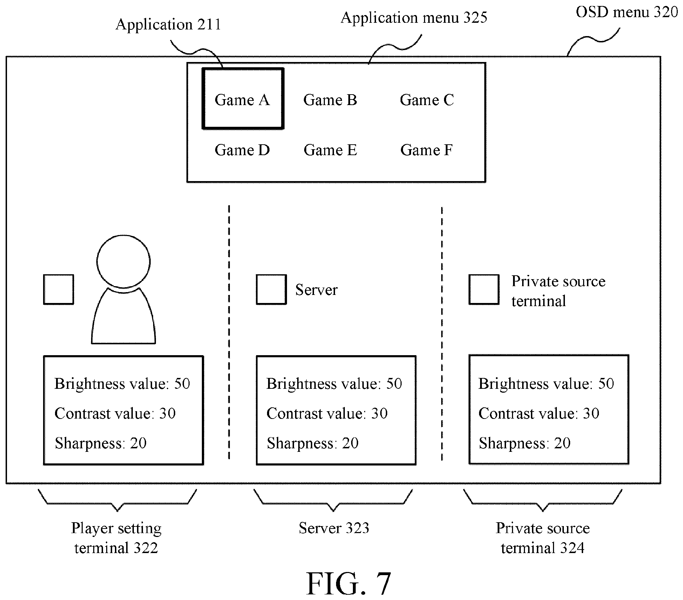

In addition to the above method for obtaining the download request 131, the display 100 can also add the option source (no reference numeral). In one embodiment, the option source includes a player setting terminal 322, a server 323, a private source terminal 324 and an application menu 325. With reference to FIG. 7, FIG. 7 shows different option sources in the OSD menu 320, the left is the player setting terminal 322, the middle is the server 323, and the right is the private source terminal 324. The player setting terminal 322 is the display option set used or defined by the professional players.

Generally, the player setting terminal 322 also lists the display option set based on the display 100 of the same model (namely, the same model information 122). When the user selects any option source, the display 100 adjusts a transmission destination of the download request 131 based on the content of the option source.

The private source terminal 324 can be the computer 200 (corresponding to the second storage unit 210) connected to the display 100, or the first storage unit 120. The user can store the set adjusted option set in the first storage unit 120 or the second storage unit 210. The user obtains the adjusted option set from the private source terminal 324 through the OSD menu 320 to serve as the recommended option 221.

In addition, the application menu 325 can be further set above the OSD menu 320, so that the user can directly select the corresponding application 211 from the application menu 325. The application menu 325 contains at least one application 211. The user can select any application 211 from the application menu 325. In the application menu 325, a coarse black line frame is regarded as the application 211 selected by the user. The first processing unit 140 sends a query request to the player setting terminal 322, the server 323 or the private source terminal 324 based on the selected application 211, so as to obtain the recommended option 221 of the selected application 211. The server 323 can also be the cloud server 400 as described above.

The server 323 can be a server established by a supplier of the display 100. The server 323 contains the multiple display option sets. The interaction between the server 323 and the display 100 can refer to the preceding text. Further, the server 323 can also add the function of Generative dialog of Artificial Intelligence (AI). The user can send the dialog content to the server 323 by the input unit 150 or the computer 200, so that the cloud server 323 selects the corresponding recommended option 221 based on the judgment of the AI model.

According to the display device, the processing system 10 and method for automatic loading options into the OSD menu, rapid switching between corresponding display options 321 of different applications can be achieved, so that the user does not need to adjust the display options 321 of the application 211 each time. Moreover, after the application 211 ends, the display 100 can reload the original display option 321 so as to decrease the adjustment time of the user on the display 100.

## Claims

1. A processing system (10) for automatic loading options into an OSD (320) menu, comprising:
a computer (200), configured to execute an application (211) and output video signals; and
a display (100), connected to the computer (200), features an OSD (320) with model information (122), wherein the OSD (320) menu contains a plurality of groups of display options, and a combination of option contents of the display options forms an original display set (121); upon receiving the video signals, the display (100) receives a download request (131) for obtaining at least one recommended option (221); and the display (100) then updates the original display set (121) to the recommended option (221) and plays an application interface (310) of the application (211) using the recommended option (221), wherein the download request (131) is matched with a combination of the model information (122) and the application (211).

2. The processing system (10) for automatic loading options into an OSD (320) menu according to claim 1, further comprising a cloud server (400) that contains a plurality of display option sets, each display option set corresponding to the application (211) and the model information (122), wherein the cloud server (400) selects at least one from the display option sets, and the selected display option set is the recommended option (221), so as to generate the download request (131).

3. The processing system (10) for automatic loading options into an OSD (320) menu according to claim 2, wherein the computer (200) is connected to the cloud server (400), the cloud server (400) provides the download request (131) to the computer (200), and the computer (200) forwards the download request (131) to the display (100).

4. The processing system (10) for automatic loading options into an OSD (320) menu according to claim 2, wherein the display (100) is connected to the cloud server (400), and the cloud server (400) provides the download request (131) to the display (100).

5. The processing system (10) for automatic loading options into an OSD (320) menu according to claim 2, wherein the cloud server (400) receives an adjusted option set of the display, and the cloud server (400) adds the adjusted option set into the display option sets.

6. The processing system (10) for automatic loading options into an OSD (320) menu according to claim 1, wherein the computer (200) ends the application (211), and the display (100) modifies the recommended option (221) into the original display set (121).

7. A display device (100) comprising:
a display unit (110), configured to play an application interface (310) or an OSD (320) menu of an application;
a storage unit (120), configured to store an original display set (121) and a model information (122), wherein the OSD (320) menu comprises a plurality of groups of display options, and a combination of option contents of the display options forms the original display set (121);
a communication unit (130), configured to receive a download request (131) or at least one recommended option (221); and
a processing unit (140), connected to the display unit (110), the storage unit (120) and the communication unit (130), wherein the processing unit (140) obtains the recommended option (221) based on the received download request (131), and the processing unit (140) then updates the original display set (121) to the recommended option (221) and plays the application interface (310) of the application (211) using the recommended option (221).

8. The display device (100) according to claim 7, further comprising an input unit (150), wherein the processing unit (140) is connected to the input unit (150), and the input unit (150) is configured to adjust at least one display option of the original display set (121).

9. The display device (100) according to claim 8, wherein the processing unit (140) modifies the display options based on an adjustment requirement (151), the modified display options are an adjusted option set, and the storage unit (120) stores the adjusted option set.

10. The display device (100) according to claim 9, wherein the communication unit (130) is connected to an option supply terminal, the option supply terminal being a cloud server (400), a computer (200), the storage unit (120) or a combination thereof, and the processing unit (140) drives the communication unit (130) to send the adjusted option set to the option supply terminal.

11. A processing method for automatic loading options into an OSD (320) menu, applying to adjust at least one corresponding display option based on an application interface (310) of an application played by a display, and comprising:
receiving a download request (131) from an option supply terminal by the display (100), the download request (131) being matched with an application (211) and model information (122);
obtaining at least one recommended option (221) by the display (100) based on the download request (131); and
updating an original display set (121) in an OSD (320) menu to the recommended option (221) and playing the application interface (310) of the application (211) using the recommended option (221) by the display (100).

12. The processing method for automatic loading options into an OSD (320) menu according to claim 11, wherein the option supply terminal is a computer (200), a cloud server (400) or a combination thereof.

13. The processing method for automatic loading options into an OSD (320) menu according to claim 12, wherein the step of receiving a download request (131) from an option supply terminal by the display (100) comprises:
selecting a corresponding recommended option (221) by the cloud server (400) based on the application (211) and the model information (122);
encapsulating the selected recommended option (221) into the download request (131) and sending the download request (131) to the computer (200) by the cloud server (400); and
forwarding the recommended option (221) to the display (100) by the computer (200).

14. The processing method for automatic loading options into an OSD (320) menu according to claim 11, wherein the step of updating an original display set (121) to the recommended option (221) and playing the application interface (310) of the application (211) using the recommended option (221) by the display (100) comprises:
storing the original display set (121) by the display (100); and
modifying the recommended option (221) into the original display set (121) by the display (100) when the application (211) ends.

15. The processing method for automatic loading options into an OSD menu (320) according to claim 11, wherein the step of receiving a download request (131) from an option supply terminal by the display (100) comprises:
adjusting a transmission destination of the download request (131) by the display (100) based on an option source.
